# EUROPEAN PATENT APPLICATION

(11) **EP 1 953 089 A1**
(43) Date of publication of application: **06.08.2008**
(21) Application number: 07002884.0
(22) Date of filing: 12.02.2007
(51) Int. Cl.: B65B 9/04, B65B 55/00, B65B 25/06, A23L 3/00

(54) **Meat product cooked in a tray**

(30) Priority: 31.01.2007 EP 07002054
(71) Applicant: CFS Kempten GmbH, 87437 Kempten (DE)
(72) Inventor: Janssen, Marcel M.G.W.M, 5443 NC Haps (NL); Dujardin, Bernard, 1180 Brussels (BE)
(74) Representative: Wolff, Felix

(57) **Abstract**

The present invention relates to a process for the production of an eatable product that is cooked and packaged into a plastic material. Another subject matter of the present invention is a product available according to the inventive process.

## Description

The present invention relates to a process for the production of an eatable product that is cooked and packaged into a plastic material. Another subject matter of the present invention is a product available according to the inventive process.

Eatable products, which are, for example, at least partially, made of minced meat, are nowadays often produced by providing a meat mixture, which is subsequently formed, cooked, cut into adequate pieces and then packaged for example into a tray or other plastic material. This process has the disadvantage, that it is first of all very labour-intensive and secondly that there is a danger of contamination of the product between the process steps of cooking and packaging.

It was therefore the objective of the present invention to provide a process for the production of eatable products that is less labour-intensive and that results in a product that meets higher hygienic standards.

The problem is solved with a process for the production of an eatable product, whereas:
- the raw product is filled into a tray made from plastic film,
- the a top-film is attached to the tray to form a closed package and
- the product is pasteurized and/or sterilized in the closed package.

The pasteurisation can also take place after the product has been filled in the tray but before the package is closed.

It was totally surprising and could not have been expected by a person skilled in the art, that the inventive process is carried out with a minimal amount of human labor and that the resulting products have a higher hygienic standard than products produced according to the conventional process, because it is not contaminated during the slicing or repackaging of already pasteurized products. Furthermore, the appearance of the product in the tray is much better, because the plastic material fits tightly around the product. There is no gap between the products and the tray. The product is much faster pasteurized than with conventional processes.

According to the present invention, an essentially raw eatable product, is produced and then filled into a tray which is made from a plastic film. This raw product can be any eatable product. Preferably the product comprises meat, especially minced meat. Furthermore, it is possible, that the meat product comprises meat pieces, for example liver pieces, which could be precooked. The meat product preferably also comprises vegetables, spices and/or herbs. In another preferred embodiment of the present invention, the product comprises fruit and/or sugar. Preferably, this product is marmalade or the like. The eatable product can be also fruit or vegetables, preferably as a puree.

The filled product prior to pasteurization does not exceed a temperature of ≤ 55° C more preferably ≤ 50° C, most preferably ≤ 45° C before it is filled into a tray.

The tray is made from a plastic film, which is preferably deep drawn. Preferably, the trays are transported along a packaging machine, which can be a so called tray sealer or a so called form-fill-seal-packaging machine.

After the product has been filled into the tray, a top film is applied to the tray to form a closed package. Preferably, the top film is attached to the tray by heat sealing. The top film can be attached either peel ably or not peelably to the tray. Details regarding the material of the tray and the material of the top film are described in more detail below.

Prior or after closing of the package, the packaged product is pasteurised and/or sterilized. This preferably takes place in a continuously operating oven for example a spiral oven. Preferably, the pasteurisation/sterilization is carried out at temperatures < 100°C preferably < 90°C. The pasteurisation/sterilization is terminated when a certain core temperature of the products is reached. For meat products a core temperature of more than 80°C, preferably more than 90°C is desirable. After the pasteurisation, the pasteurisation value (VP) is preferably > 1400 after 30 minutes of pasteurisation and more preferably > 1800 after 45 minutes.

In a preferred embodiment of the present invention steam is applied into the tray prior to its closing. More preferably, the steam is applied to the tray after the product has been filled into the tray. Preferably, the steam temperature is 150°C - 200°C, more preferably 165°C-190°C and most preferably 175°C - 185°C. Preferably, the steam is applied for 0,5 - 5 sec. preferably 0,5 - 4 sec., before the package is closed. This preferred embodiment of the inventive process has the advantage, that the air is flushed out of the tray before it is closed. Preferably, the steam is dry, so that no condensation takes place in the tray. The steam also has a vacuumizing effect.

In another preferred embodiment, the tray with the filled in product is exposed to a such vacuum, that gas which is present in the product is at least partially removed. Preferably the vacuum is 700 - 950 mbar, more preferably 750 - 850 mbar. This preferred embodiment of the inventive process has the advantage, that the extension of the product due to the pasteurisation process is reduced and consequently the package is not or less deformed during the pasteurisation process.

Prior to the pasteurisation, the closed package is preferably turned upside down so that the top film faces downwards. This preferred embodiment of the inventive process has the advantage, that the top film does not wrinkle during the pasteurisation process, so that the final product has a better appearance.

After the pasteurisation is terminated, the product is preferably cooled to a temperature < 10°C preferably ≤ 8°C. However, the product is not chilled, i. e. the product is not cooled to temperatures < 0°C.

Preferably the tray for the above mentioned inventively packaged ready to eat food product is thermoformed from a multilayer barrier film which is suitable for thermo-forming and sealing especially well on FFS-machines. Due to that it can be processed to multilayer barrier film packaging perishable food on FFS-machines easily.

Such multilayer film needs to be suitable for pasteurisation in order to produce a ready to eat food product from the relevant (uncooked) food raw materials filled in the thermoformed packaging element (tray), sealed with the lid film and heated to temperatures < 100°C for pasteurisation.

The multilayer film comprises
1) a basic layer as a surface layer consisting of a thermoplastic polyolefin and/or olefin copolymer
2) a gas barrier layer
3) a sealing layer as the other surface layer of the multilayer film and
4) optionally at least one adhesive layer between layer 1) and 2) and/or between layer 2) and 3).

The thermoplastic polymer of the basic layer is preferably based on polypropylene. A homopolymer as well as a propylene/ethylene copolymer and a mixture of both can be used. In a preferred embodiment polypropylene-homopolymer with a melting index of 0.5 to 7, in a particular preferred form of 1.5 to 4.5 g/10min (2.16 kg, 230°C, measured according to ASTM 1238) is used. In another preferred embodiment a propylene/ethylene copolymer with a melting index between 0.5 and 5 g/10min (2.16 kg, 230°C, measured according to ASTM 1238) can be used.

The thickness of the basic layer is at least 400 µm, preferably in the range of 400 µm - 2.000 µm. In a particular preferred embodiment it ranges from 600 µm 1.000 µm.

The gas barrier layer 2) should be especially a barrier for steam, N₂, O₂ and CO₂.

The barrier layer is preferably based on a vinylidene chloridcopolymer with good O₂ characteristics.

More preferably, the barrier film is based on a ethylene/vinyl-alcohol copolymer (EVOH). Such EVOH should contain an ethylene percentage of 32 to 45 mol%. EVOH-copolymers with ethylene percentages of 38 to 45 mol% are preferred. Particularly preferred is an ethylene percentage of 38 mol%. The melting index of the EVOH copolymers should be 1.2-8g/10min (MFI according to ASTM 1238, 230°C).

The thickness of the layer of the EVOH-layer should range from 3 to 20 µm, preferably from 5 to 10 µm. The oxygen permeability should be 30, preferably 20 (cm³.m².dbar O₂) at maximum (measured according to DIN 53380).

Ethylene-polymers are preferably used as material for the sealing layer 3). Polyethylene of low density (LDPE) metalhogen polyethylene (m-PE), linear polyethylene of low density (LLPE) as well as ethylene-vinyl-acetate copolymers (EVA) can be used. An LDPE with a density in the range of 0.9225 and 0.9335 g/cm³ is preferred. The melting index of the polymers used should be in the range of 0.5 to 8.0 g/10 min (190°C, 2.16 kg, ASTM 1283), preferably between 2 and 5 g/10min. In a similar preferred embodiment an ethylene-vinyl-acetate copolymer with a vinyl-acetate percentage (VAC) of 3 to 10 weight-% is used as sealing material. Polymers with a VAC-contents between 4 and 6 weight-% are preferred.

In a special embodiment, the sealing layer is suitable for peeling. The sealing layer then can comprise of a mixture of LDPE and polybutylene (PB). PB can be with the LDPE in a range of 15 to 30 weight %, preferably in a range of 20 to 28 weight %. The melting index of the PB should lie in the range of 0.3 and 2.0 g/10min (190°C and 2.16 kg, ASTM 1283).

The thickness of the sealing layer should range from 15 to 40 µm, preferably from 20 to 30 µm.

When using a polyethylene as material for the sealing layer, an adhesive agent should be used between the barrier layer and the sealing layer: Should VAC be used as sealing layer material, an adhesive agent is advantageous, but not necessarily compelling.

The adhesive agent preferably consists of acid-modified polyolefins, known in the art.

In a special embodiment, the layers of adhesive agent can also be the usual laminating adhesives, which are applied with a coating quantity between 1,5 and 4g/m².

The thickness of the adhesive layer can be in the range from 2 to 6 µm. The range between 2 to 4 µm is preferred.

Should the multilayer film contain several adhesive layers, these layers can be made of the same different preferably however from different polymeric materials.

Preferably, an adhesive layer is between the basic layer made of polypropylene and the EVOH-layer and an acid-modified polyolefin adhesive layer between the EVOH-layer and the sealing layer.

It is particularly important for a good thermoformability and for obtaining packaging elements (trays) with sufficient mechanical properties that the basic layer of the multilayer film has a thickness of at least 400 µm.

The two surface layers of the film can contain the usual lubricating agents and antiblocking agents as i. e. stearic acid amide, alkyl polysiloxane as i. e. polydimethyl siloxane and silicon dioxide. All or individual layers can contain stabilizers of the known kind as additives. Preferably the multilayer film is transparent. However, it can be also colored.

The thermo-forming, preferably deep-drawn trays produced from the multilayer film can be sealed after being filled with known lidding films. As lidding film a multilayered film with the sequence of layers as i. e. PET/PVDC/adhesive/LDPE or a film "TOP GUARD" with the sequence of layers OPP/adhesive/PE/adhesive/EVOH/adhesive/ PE can be used, [OPP = orientated polypropylene].

As top or lidding films, films with the structure PET/SiOx/adhesive/LDPE are particularly suitable. The biaxial orientated polyethylene terephthalate (PET) film is coated in a plasma with SiOx in a vacuum chamber. In a following step of the process, a polyethylene film is laminated on this film by means of adhesive. This film is characterized by a particularly good transparency and a high breaking resistance. A packaging tray sealed with this film shows a particularly good gas barrier (O₂ barrier) property.

The sealing layer of the lidding film can be also based on a mixture of LDPE and PB if a peelable sealing between the tray and the lid is required. If a peelable sealing between the two packaging elements is required either the sealing layer of the tray or of the lid is peelable.

The multilayer barrier films can be produced by known processes, preferably by the usual blown film coextrusion - or cast film coextrusion procedure. Preferably the usual blown film coextrusion procedure is applied.

As far as the film should be also printed on, an activation of the surface of the basic layer via corona-or flame pre-treatment should be carried out. The film can also be pre-treated in the plasma. A fluorine pre-treatment is also possible.

Preferably the top-film is attached peelable to the tray, even though the product grows during pasteurisation.

Another subject matter of the present invention is the product available according to the inventive process.

Preferably, the product is a meat product which comprises at least partially minced meat. Preferably, the meat product is a meat pie.

In another preferred embodiment, the product comprises meat pieces preferably liver pieces, which can be precooked.

In another preferred embodiment the product comprises fruit and or sugar. More preferably the product is marmalade.

Preferably the inventive product comprises a gelling material. A gelling material is for example advantageous in meat products for marmalade as a water binding material.

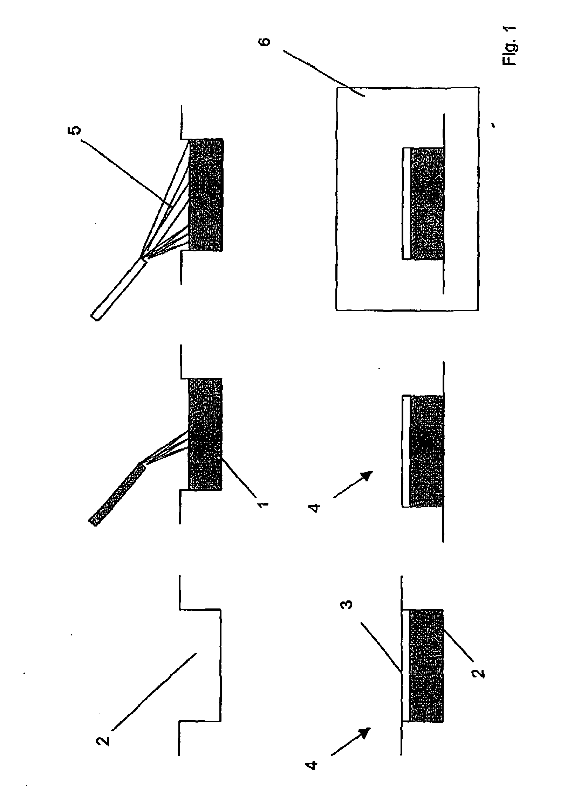

The inventive process is now described according to the only figure 1. This figure shows one embodiment of the inventive process. First of all a tray 2 is provided for example as a preformed tray in a tray sealer operation or by for example deep drawing a flat film in a form-fill-seal-packaging machine. Subsequently, this tray is filled with the product to a certain level. Conventionally, the product is either liquid or pasty so that it either flows or can be pumped into the tray and is then formed by the tray. Subsequently, steam 5 is applied to the product and then the top film 3 is ceiled on the tray 2 to provide the closed package 4. This closed package 4 is turned upside down and then pasteurised for example in an oven. Prior to the pasteurisation of the package, a singling of the individual packages must be carried out in case that the trays are produced on a form-fill-seal-packaging machine. After the product is pasteurised, the product is solid and it has taken up the form of the tray. The product stays in the tray until it is consumed by the customer and can then be removed from the tray.

The invention is now explained in further detail according to the following example.

In the following examples a "PowerPak" packaging machine has been used to package the raw product. The pasteurisation of the product was carried out in a "FlowCook". Both apparatus are provided by the company CFS B.V.

### Example 1:

A film with the sequence PP/adhesive/PE/adhesive/EVOH/adhesive/PE = [C-base D] (40) from CFS with a thickness of 675 µm and a width of 432 mm was formed into trays. These trays were filled with meat product comprising duck liver. The product had a temperature of app. 40°C. Subsequently, the product was exposed to steam with a temperature of 195°C for 3 sec. The steam had a pressure of 2,2 bar. A lid film TOP GUARD from CFS with a thickness of 55 µm and a width of 430 mm was sealed at 190°C for 2 sec to the tray to form a closed package. Subsequently the package was pasteurised at a temperature of 82°C for 30 min until the core of the product reached > 75°C.

### Example 2:

A film C-base D (40) from CFS with a thickness of 675 µm and a width of 432 mm was formed into trays. These trays were filled with meat product comprising duck liver and yellow fat inlays. The product had a temperature of app. 40°C. Subsequently, the product was exposed to steam with a temperature of 195°C for 3 sec. The steam had a pressure of 2,2 bar. A lid film TOP GUARD from CFS with a thickness of 55 µm and a width of 430 mm was sealed at 190°C for 2 sec to the tray to form a closed package. Subsequently the package was pasteurised at a temperature of 82°C for 30 min until the core of the product reached > 75°C.

### Example 3:

A film C-base D (40) from CFS with a thickness of 675 µm and a width of 432 mm was formed into trays. These trays were filled with meat product comprising duck liver. The product had a temperature of app. 40°C. A lid film TOP GUARD from CFS with a thickness of 55 µm and a width of 430 mm was sealed at 190°C for 2 sec to the tray to form a closed package. Subsequently the package was pasteurised at a temperature of 82°C for 30 min until the core of the product reached > 75°C.

### Example 4:

A film C-base D (40) from CFS with a thickness of 675 µm and a width of 432 mm was formed into trays. These trays were filled with meat product comprising pork liver and fresh liver on the top and bottom. The product had a temperature of app. 40°C. Subsequently, the product was exposed to steam with a temperature of 195°C for 3,5 sec. The steam had a pressure of 2,7 bar. A lid film TOP GUARD from CFS with a thickness of 55 µm and a width of 430 mm was sealed at 190°C for 2 sec to the tray to form a closed package. Subsequently the package was pasteurised at a temperature of 78°C for 45 min until the core of the product reached > 75°C.

### Example 5:

A film C-base D (40) from CFS with a thickness of 675 µm and a width of 432 mm was formed into trays. These trays were filled with meat product comprising pork liver and brown gel inlay. The product had a temperature of app. 40°C. Subsequently, the product was exposed to steam with a temperature of 195°C for 3,5 sec. The steam had a pressure of 4,0 bar. A lid film TOP GUARD from CFS with a thickness of 55 µm and a width of 430 mm was sealed at 190°C for 2 sec to the tray to form a closed package. Subsequently the package was pasteurised at a temperature of 84°C for 30 min until the core of the product reached > 75°C.

### Example 6:

A film C-base D (40) from CFS with a thickness of 675 µm and a width of 432 mm was formed into trays . These trays were filled with meat product comprising pork liver and champignons and herbs. The product had a temperature of app. 40°C. Subsequently, the product was exposed to steam with a temperature of 195°C for 3,5 sec. The steam had a pressure of 4,0 bar. A lid film TOP GUARD from CFS with a thickness of 55 µm and a width of 430 mm was sealed at 190°C for 2 sec to the tray to form a closed package. Subsequently the package was pasteurised at a temperature of 84°C for 30 min until the core of the product reached > 75°C.

### Example 7:

A film C-base D (40) from CFS with a thickness of 675 µm and a width of 432 mm was formed into trays. These trays were filled with meat product comprising liver. The product had a high viscosity and a chunky structure due to large meat pieces. The product had a temperature of app. 40°C. Subsequently, the product was exposed to steam with a temperature of 195°C for 3,5 sec. The steam had a pressure of 4,0 bar. A lid film TOP GUARD from CFS with a thickness of 55 µm and a width of 430 mm was sealed at 190°C for 2 sec to the tray to form a closed package. Subsequently the package was pasteurised at a temperature of 84°C for 30 min until the core of the product reached > 75°C.

## Claims

1. Process for the production of an eatable product, **characterized in, that**:
- the raw product (1) is filled into a tray (2) made from plastic film,
- the a top film (3) is attached to the tray (2) to form a closed package (4) and
- the product is pasteurized and/or sterilized before or after the package (4) is closed.

2. Process according to one of the preceding claims, **characterized in, that** steam is applied into the tray prior to closing, preferably after the product has been filled into the tray.

3. Process according to claim 2, **characterized in, that** steam has a temperature of 150-200°C, preferably 165 -190°C and more preferably 175 -185°C.

4. Process according to one of claims 2 - 3, **characterized in, that** the steam is applied for 0,5 - 5 sec., preferably 0,75 - 4 sec.

5. Process according to one of the preceding claims **characterized in, that** the product is sterilized.

6. Process according to one of the preceding claims, **characterized in, that** the pasteurisation takes place at temperatures < 100°C, preferably < 90°C

7. Process according to one of the preceding claims, **characterized in that** the pasteurisation is carried out in a continuously operating oven.

8. Process according to one of the preceding claims, **characterized in, that** the product is chilled.

9. Process according to claim 1, **characterized in, that** the product is formed in the tray.

10. Process according to one of the preceding claims **characterized in, that** the pasteurisation is carried out with the top film facing downwards.

11. Process according to one of the preceding claims, **characterized in, that** the product is a meat product, preferably a pie.

12. Process according to claim 11, **characterized in, that** the meat product comprises minced meat.

13. Process according to one of claims 11 or 12, **characterized in, that** the meat product comprises liver pieces.

14. Process according to one of the preceding claims, **characterized in, that** the product comprises fruit and/or sugar.

15. Process according to claim 14, **characterized in, that** the product is marmalade.

16. Process according to one of the preceding claims, **characterized in, that** it is continuous or semi-continuous.

17. Process according to one of the preceding claims, **characterized in, that** the top-film is peelable.

18. Product available according to one of the preceding claims.

19. Product according to claim 18, **characterized in, that** it is a meat product, preferably a pie.

20. Product according to claim 18 or 19, **characterized in, that** it comprises liver.

21. Product according to claim 18, **characterized in, that** it comprises fruit and/or sugar.

22. Product according to one of the preceding claims, **characterized in, that** it comprises a gelling material.
